# EUROPÄISCHE PATENTSCHRIFT

(11) **EP 0 867 384 B1**
(45) Veröffentlichungstag und Bekanntmachung des Hinweises auf die Patenterteilung: **27.06.2001**
(21) Anmeldenummer: 98104113.0
(22) Anmeldetag: 07.03.1998
(51) Int. Cl.: B65G 47/248

(54) **Vorrichtung zum ausgerichteten Abführen von mit wechselweise unten liegender und oben liegender Schmalseite zugeführten Trapezstreifen**
Device for discharging trapezial strips, alternately feed with their narrow side up and down
Dispositif pour évacuer des barres trapézoidales, alimentées avec leurs face mince alternativement en haut et en bas

(30) Priorität: 26.03.1997 DE 19712697
(43) Veröffentlichungstag der Anmeldung: 30.09.1998
(73) Patentinhaber: Siempelkamp Handling Systeme GmbH & Co., 82515 Wolfratshausen (DE)
(72) Erfinder:
(74) Vertreter: Honke, Manfred, Dr.-Ing.

(56) Entgegenhaltungen:
- DE-A- 3 243 977
- FR-A- 2 161 320
- US-A- 2 784 831

## Beschreibung

Die Erfindung betrifft eine Vorrichtung zum ausgerichteten Abführen von mit wechselweise unten liegender und oben liegender Schmalseite zugeführten Trapezstreifen zum Einlegen in Trapezsicken von Deckschichten für Sandwichelemente. - Im Rahmen der Erfindung meint Sandwichelemente solche plattenförmigen Elemente wie Wand- oder Deckenelemente, die im wesentlichen aus einer oberen und einer unteren Deckplatte sowie einem zwischengeschalteten Füllstreifenkern bestehen. Bei derartigen Sandwichelementen weist häufig zumindest eine der beiden Deckschichten Trapezsicken auf, die mit Trapezstreifen ausgefüllt werden müssen. Sowohl die Trapezstreifen als auch die Füllstreifen für den Füllstreifenkern bestehen regelmäßig aus Mineralfaserwolle, Glasfaserwolle, geschäumtem Kunststoff o. dgl. Dämmaterial, um eine hinreichende Feuerwiderstandsfähigkeit zu erreichen. Die Trapezstreifen werden im allgemeinen mittels einer Trapezsäge hergestellt, welche wechselweise mit ihrer Schmalseite nach unten liegende und nach oben liegende Trapezstreifen erzeugt. Zum Einlegen in die Trapezsicken der Deckschichten müssen die Trapezstreifen mit ihrer Schmalseite nach unten liegen. Folglich unterscheidet man richtig liegende und falsch liegende Trapezstreifen, wobei letztere mit ihrer Schmalseite nach oben liegen und gewendet werden müssen, bevor sie in die Trapezsicken eingelegt werden können. Das Wenden falsch liegender Trapezstreifen erfolgt bisher in Handarbeit. Das ist personalaufwendig und in fertigungstechnischer Hinsicht unrationell. Hier will die Erfindung Abhilfe schaffen.

Der Erfindung liegt die Aufgabe zugrunde, eine Vorrichtung zu schaffen, welche das ausgerichtete Abführen von Trapezstreifen mit nach unten liegender Schmalseite in funktionssicherer und automatischer Betriebsweise gewährleistet, sofern diese Trapezstreifen mit wechselweise unten liegender und oben liegender Schmalseite zugeführt werden.

Zur Lösung dieser Aufgabe ist die gattungsgemäße Vorrichtung gekennzeichnet durch einen Trommelwender mit nebeneinander angeordneten Trapezfächern mit wechselweise nach unten und nach oben ausgerichteten Trapezaufnahmen für wechselweise mit unten liegender und oben liegender Schmalseite eingeführte Trapezstreifen und mit einem den Trapezfächern für die mit ihrer Schmalseite nach oben liegenden Trapezstreifen auf der Abführungsseite zugeordneten Anschlag, wobei der Trommelwender um seine Längsachse um zumindest 180° drehbar gelagert ist und durch Fördermittel zum Abtransport der Trapezstreifen. - Diese Maßnahmen der Erfindung haben zur Folge, daß die lagerichtig mit ihrer Schmalseite nach unten liegenden Trapezstreifen den Trommelwender ohne weiteres durchlaufen und über eine nachgeschaltete Transportanlage den zu bestückenden Deckschichten bzw. ihren Trapezsicken zugeführt werden können, während die lagefalsch mit ihrer Schmalseite nach oben liegenden Trapezstreifen zwar in den Trommelwender bzw. in die Trapezaufnahmen der Trapezfächer einlaufen können, jedoch von dem nachgeschalteten Abstandhalter zurückgehalten werden, folglich den Trommelwender nicht durchlaufen können. Vielmehr wird der Trommelwender - nachdem die lagerichtigen Trapezstreifen den Trommelwender verlassen haben - um 180° gedreht, so daß sich dann die lagefalsch angelieferten Trapezstreifen ebenfalls in lagerichtiger Position befinden und den Trommelwender verlassen können, ohne daß der Abstandhalter sie daran hindert. Folglich läßt der Trommelwender die lagerichtig antransportierten Trapezstreifen passieren und sorgt dafür, daß die lagefalsch abtransportierten Trapezstreifen in eine lagerichtige Position überführt werden, ehe sie den Trommelwender verlassen können. Das gelingt in funktionssicherer und automatischer Betriebsweise, so daß ein personalsparendes und rationelles Einlegen der Trapezstreifen in die Trapezsicken der Deckschichten von Sandwichelementen gewährleistet ist.

In weiterer Ausgestaltung sieht die Erfindung vor, daß die Trapezfächer sich zumindest im Bereich der Trapezaufnahmen überschneiden und dadurch die nach unten und nach oben ausgerichteten Trapezaufnahmen in gleicher Zuführungs- und Abführungsebene nebeneinander liegen, so daß der Abtransport der wechselweise falsch und richtig liegenden Trapezstreifen und der Abtransport nur noch richtig liegender Trapezstreifen über vorgeschaltete und nachgeschaltete Rollenbahnen bzw. entsprechende Fördermittel erfolgen kann, deren Zuführungs- und Abführungsebene eben in der Ebene der Trapezaufnahmen liegt. Um ein einwandfreies Hindurchführen der Trapezstreifen durch den Trommelwender zu erreichen, lehrt die Erfindung weiter, daß die Trapezfächer in einer oberen Reihe und einer unteren Reihe von zur Förderrichtung der Trapezstreifen querliegenden und in Förderrichtung mit vorgegebenen Abständen zueinander angeordneten Förderrollen durchdrungen sind, und daß die Förderrollen die Trapezaufnahmen gegen die zugeordneten Breitseiten der Trapezstreifen begrenzen, folglich auf die Breitseiten der Trapezstreifen im Sinne einer Vorwärtsbewegung in Förderrichtung einwirken. Dazu bilden die Förderrollen Rollgänge für die Trapezstreifen und sind selbständig und taktweise angetrieben. Auf diese Weise ist störungsfreier Transport der Trapezstreifen beim Einlauf in den Trommelwender, durch den Trommelwender hindurch und beim Auslauf aus dem Trommelwender gewährleistet.

Der Trommelwender ist zweckmäßigerweise in Horizontallage angeordnet und um seine horizontale und mittige Längsachse taktweise um eine 180°-Drehung angetrieben, wobei die Trapezaufnahmen auf einer horizontalen, die mittige Längsachse im Drehmittelpunkt des Trommelwenders schneidenden Querachse angeordnet sind, welche eine Teilungsachse für die hälftige Teilung der Trapezaufnahmen bildet. Die Trapezaufnahmen befinden sich also im Bereich der mittleren horizontalen Querachse des Trommelwenders. Dabei liegt der Drehmittelpunkt des Trommelwenders im Schnittpunkt der Teilungsachse mit einer Trennwand der betreffenden benachbarten Trapezaufnahmen. Auf diese Weise wird erreicht, daß der Abstandhalter die im Trommelwender falsch positionierten Trapezstreifen nach einer 180°-Drehung tatsächlich passieren läßt, weil sich dann die betreffenden Trapezstreifen in der Position mit nach unten und folglich richtig liegender Schmalseite befinden, in der von vornherein die richtig liegenden Trapezstreifen den Trommelwender passiert haben und folglich von dem Abstandhalter nicht zurückgehalten worden sind, weil dieser Abstandhalter Trapezausnehmungen für die lagerichtigen Trapezstreifen aufweist und diese Trapezausnehmungen den lagerichtigen Trapezfächern bzw. deren Trapezaufnahmen zugeordnet sind. Durch die 180°-Drehung des Trommelwenders werden folglich die lagefalschen Trapezfächer bzw. deren Trapezaufnahmen zu lagerichtigen Trapezfächern bzw. Trapezaufnahmen mit den dann darin lagegerechten Trapezstreifen gemacht. - Erfindungsgemäß weist der Trommelwender zwei im vorgegebenen Abstand voneinander angeordnete Lagerringe auf, welche in einem Lagergestell auf Lagerrollen gelagert und über die aus Leitblechen gebildeten Trapezfächer miteinander verbunden sind, welche beidseitig der Lagerringe vorkragen. Auf diese Weise kann bei dem erfindungsgemäßen Trommelwender auf einen geschlossenen Trommelmantel verzichtet werden. Die Lagerringe sind zweckmäßigerweise außerdem mittels über ihren Umfang in gleichmäßiger Verteilung angeordneter Längsholme miteinander verbunden, um eine hinreichende Stabilität für den Trommelwender zu erreichen. Zumindest einer der Lagerringe ist über einen Riementrieb, einen Zahnstangentrieb oder einen Reibrädertrieb von einem Antriebsmotor angetrieben. Ferner empfiehlt die Erfindung, daß zumindest einer der Lagerringe um 180° zueinander und um 90° zu den Trapezaufnahmen bzw. den Trapezaufnahmereihen versetzte Zentrieraufnahmen für eine Zentriereinrichtung am Lagergestell aufweist, welche mit einem vor- und zurückfahrbaren Zentrierglied in die jeweilige Zentrieraufnahme nach einer 180°-Drehung des Trommelwenders eingreift, um eine exakte Positionierung der Trapezfächer bzw. ihrer Trapezaufnahmen in bezug auf insbesondere den nachgeschalteten Abstandhalter zu erreichen. Denn nur bei exakter Ausrichtung können die lagerichtigen Trapezstreifen den Abstandhalter passieren. Dabei sind die Zentrieraufnahmen vorzugsweise als umgekehrt V-förmige Aufnahmen und die Zentriereinrichtung als Zylinderkolbenanordnung mit einem Zentrierbolzen als Zentrierglied in Verlängerung der Kolbenstange der Zylinderkolbenanordnung ausgebildet.

Nach Lehre der Erfindung ist der Anschlag als ortsfester Anschlag mit den Trapezausnehmungen für die lagerichtigen Trapezstreifen ausgebildet, wobei diese Trapezausnehmungen den lagerichtigen Trapezfächern bzw. deren Trapezaufnahmen zugeordnet sind. Es besteht aber auch die Möglichkeit, daß der Anschlag an dem Trommelwender angeschlossen ist und mit diesem umläuft, allerdings muß dann der Anschlag mit beidseitig versetzten Trapezausnehmungen wahlweise den Trapezaufnahmen mit den lagefalschen Trapezstreifen vorschaltbar sein, so daß sich die Trapezausnehmungen stets nur vor den lagerichtigen Trapezstreifen befinden. Es besteht aber auch die Möglichkeit, zwei getrennt voneinander vorschaltbare Anschläge mit entsprechenden Trapezausnehmungen zu verwirklichen.

Im folgenden wird die Erfindung anhand einer lediglich ein Ausführungsbeispiel darstellenden Zeichnung näher erläutert; es zeigen:

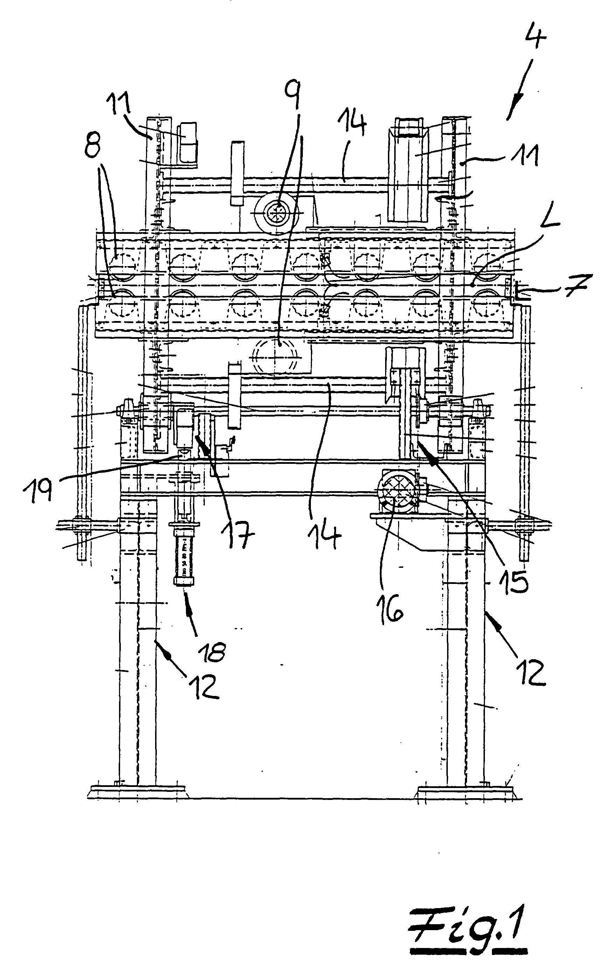

- Fig. 1: einen Trommelwender in schematischer Seitenansicht,
- Fig. 2: eine Stirnansicht auf den Gegenstand nach Fig. 1,
- Fig. 3: einen Lagerring für den Gegenstand nach Fig. 1 in schematischer Stirnansicht und
- Fig. 4: ausschnittsweise einen Vertikalschnitt durch Trapezstreifen mit wechselweise nach unten und nach oben liegender Schmalseite nach dem Verlassen einer Trapezsäge und vor der Zuführung an den Trommelwender,

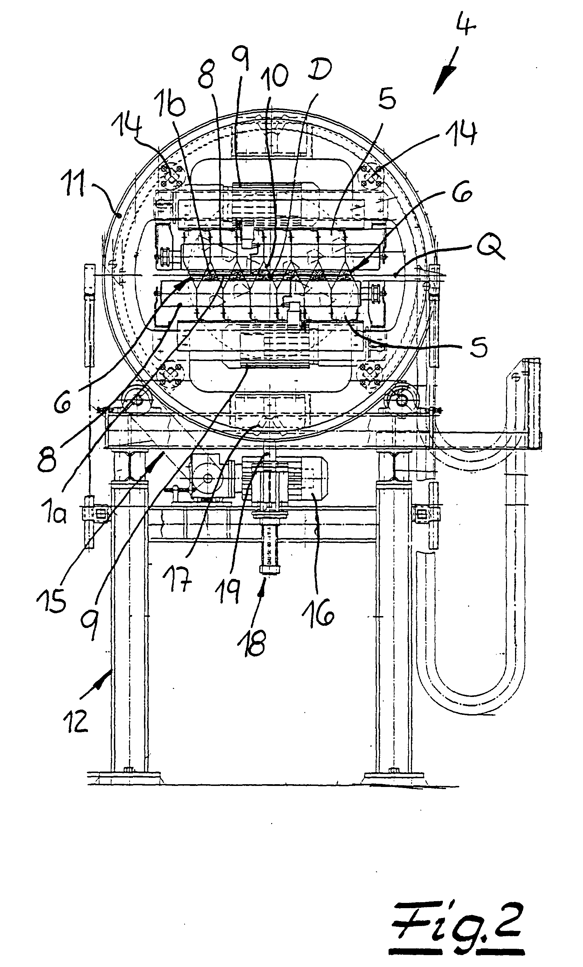

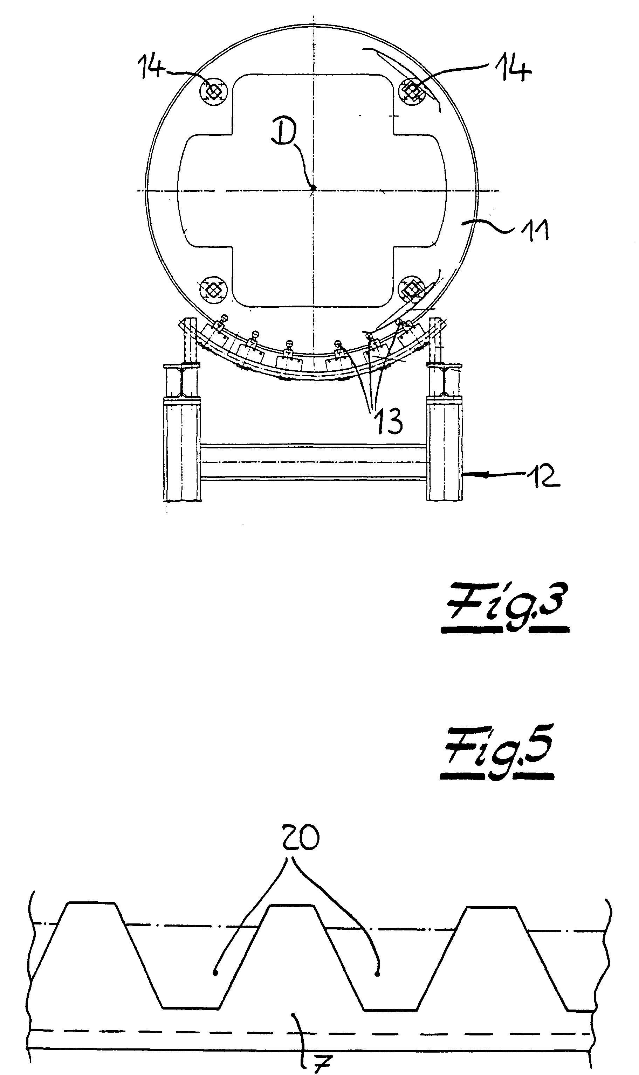

- Fig. 5: einen Anschlag für den Gegenstand nach Fig. 1 in Stirnansicht und

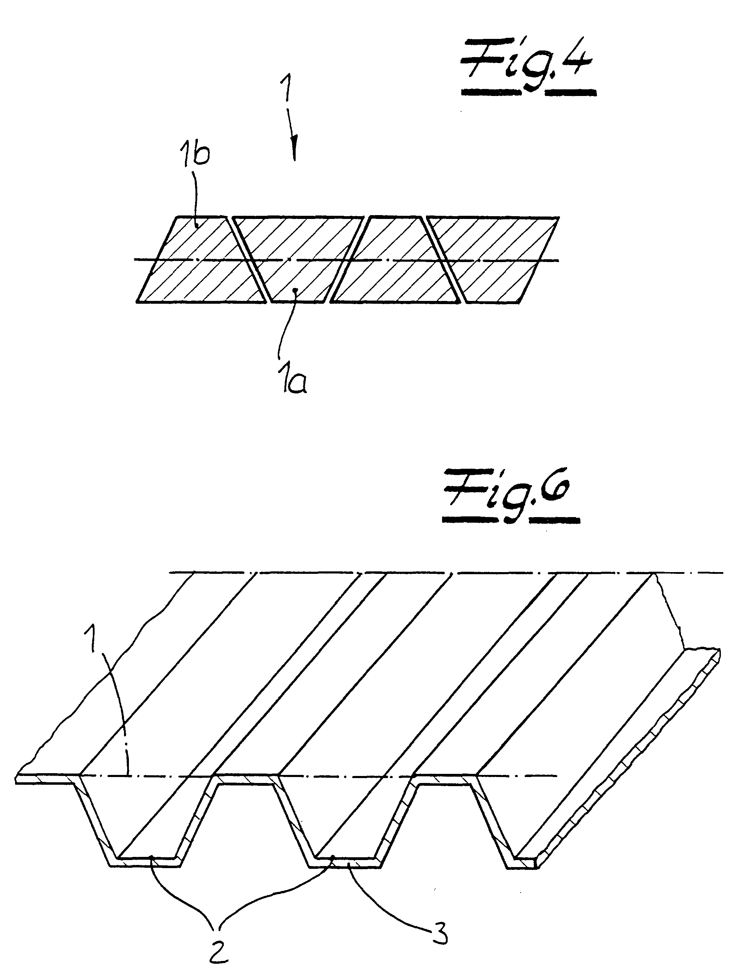

- Fig. 6: ausschnittsweise und in perspektivischer Darstellung eine Deckplatte mit Trapezsicken für Sandwichelemente.

In den Figuren ist eine Vorrichtung zum ausgerichteten Abführen von in wechselweise unten liegender und oben liegender Schmalseite zugeführten Trapezstreifen 1 zum Einlegen in Trapezsicken 2 von Deckschichten 3 für Sandwichelemente dargestellt. Bei dieser Vorrichtung handelt es sich um einen Trommelwender 4 mit zumindest in zwei Reihen übereinander und teilweise nebeneinander angeordneten Trapezfächern 5 mit wechselweise nach unten und nach oben ausgerichteten Trapezaufnahmen 6 für wechselweise mit unten liegender und oben liegender Schmalseite eingeführte Trapezstreifen 1a, 1b. Den Trapezfächern 5 für die mit ihrer Schmalseite nach oben und folglich falsch liegenden Trapezstreifen 1b ist auf der Abführungsseite des Trommelwenders 4 ein Anschlag 7 zugeordnet. Der Trommelwender 4 ist um seine Längsachse L drehbar gelagert. Die Trapezfächer 5 überschneiden sich zumindest im Bereich der Trapezaufnahmen 6, wodurch die nach unten und nach oben ausgerichteten Trapezaufnahmen 6 in gleicher Zuführungs- und Abführungsebene für einen vorgeschalteten Zuförderer und einen nachgeschalteten Abförderer nebeneinanderliegen. Die Trapezfächer 5 sind in der oberen Reihe und der unteren Reihe von zur Förderrichtung der Trapezstreifen 1 querliegenden und in Förderrichtung mit vorgegebenen Abständen zueinander angeordneten Förderrollen 8 durchdrungen. Die Förderrollen 8 begrenzen die Trapezaufnahmen 6 gegen die zugeordneten Breitseiten der Trapezstreifen 1, arbeiten also gegen die Breitseiten der Trapezstreifen 1, so daß diese in Längsrichtung der Trapezfächer 5 bewegt werden. Dazu sind die Förderrollen 8, welche Rollengänge für die Trapezstreifen 1 bilden, selbständig und taktweise angetrieben. Die Antriebe 9 sind angedeutet. Der Trommelwender 4 ist in Horizontallage angeordnet und um seine horizontale und mittige Längsachse L taktweise um eine 180°-Drehung angetrieben. Die Trapezaufnahmen 6 sind auf einer horizontalen, die mittige Längsachse L im Drehmittelpunkt D des Trommelwenders 4 schneidenden Querachse Q angeordnet, welche eine Teilungsachse für die hälftige Teilung der Trapezaufnahmen 6 bildet. Der Drehmittelpunkt D des Trommelwenders 4 liegt im Schnittpunkt der Quer- bzw. Teilungsachse Q mit einer Trommelwand 10 der dort befindlichen und benachbarten Trapezaufnahmen.

Der Trommelwender 4 weist zwei im vorgegebenen Abstand voneinander angeordnete Lagerringe 11 auf, welche in einem Lagergestell 12 auf Lagerrollen 13 gelagert und über die aus Leitblechen gebildeten Trapezfächer 5 miteinander verbunden sind. Die Trapezfächer 5 kragen beidseitig der Lagerringe 11 vor. Aus Stabilitätsgründen sind die Lagerringe 11 außerdem mittels über ihren Umfang in gleichmäßiger Verteilung angeordneter Längsholme 14 miteinander verbunden. Zumindest einer der Lagerringe 11 ist über einen Riementrieb 15 von einem Antriebsmotor 16 angetrieben. Zumindest einer der Lagerringe 11 weist um 180° zueinander und um 90° zu den Trapezaufnahmen 6 versetzte Zentrieraufnahmen 17 für eine Zentriereinrichtung 18 am Lagergestell 12 auf, welche mit einem vor- und zurückfahrbaren Zentrierglied 19 in die jeweilige Zentrieraufnahme 17 nach einer 180°-Drehung des Trommelwenders 4 eingreift. Die Zentrieraufnahmen 17 sind als umgekehrt V-förmigen Aufnahmen ausgebildet, während die Zentriereinrichtung als Zylinderkolbenanordnung 18 mit einem Zentrierbolzen 19 als Zentrierglied in Verlängerung der Kolbenstange ausgeführt ist. - Der Anschlag 7 hinter dem Trommelwender 4 ist nach dem Ausführungsbeispiel als ortsfester Anschlag mit Trapezausnehmungen 20 für die lagerichtigen Trapezstreifen la ausgebildet. Diese Trapezausnehmungen 20 sind den lagerichtigen Trapezfächern 5 bzw. deren Trapezaufnahmen 6 zugeordnet.

## Patentansprüche

1. Vorrichtung zum ausgerichteten Abführen von mit wechselweise unten liegender und oben liegender Schmalseite zugeführten Trapezstreifen zum Einlegen in Trapezsicken von Deckschichten für Sandwichelemente, **gekennzeichnet durch** einen Trommelwender (4) mit nebeneinander angeordneten Trapezfächern (5) mit wechselweise nach unten und nach oben ausgerichteten Trapezaufnahmen (6) für wechselweise mit unten liegender und oben liegender Schmalseite eingeführte Trapezstreifen (1) und mit einem den Trapezfächern (5) für die mit ihrer Schmalseite nach oben liegenden Trapezstreifen (1b) auf der Abführungsseite zugeordneten Anschlag (7), wobei der Trommelwender (4) um seine Längsachse (L) um zumindest 180° drehbar gelagert ist, und durch Fördermittel zum Abtransport der Trapezstreifen.

2. Vorrichtung nach Anspruch 1, dadurch gekennzeichnet, daß die Trapezfächer (5) sich zumindest im Bereich der Trapezaufnahmen (6) überschneiden und die nach unten und nach oben ausgerichteten Trapezaufnahmen (6) in gleicher Zuführungs- und Abführungsebene nebeneinander liegen.

3. Vorrichtung nach Anspruch 1 oder 2, dadurch gekennzeichnet, daß die Trapezfächer (5) in einer oberen Reihe und einer unteren Reihe von zur Förderrichtung der Trapezstreifen (1) querliegenden und in Förderrichtung mit vorgegebenen Abständen zueinander angeordneten Förderrollen (8) durchdrungen sind, und daß die Förderrollen (8) die Trapezaufnahmen (6) gegen die zugeordneten Breitseiten der Trapezstreifen (1) begrenzen.

4. Vorrichtung nach Anspruch 3, dadurch gekennzeichnet, daß die Förderrollen (8) Rollengänge für die Trapezstreifen (1) bilden und angetrieben sind.

5. Vorrichtung nach einem der Ansprüche 1 bis 4, dadurch gekennzeichnet, daß der Trommelwender (4) in Horizontallage angeordnet und um seine horizontale und mittige Längsachse (L) taktweise um 180°-Drehung angetrieben ist, und daß die Trapezaufnahmen (6) auf einer horizontalen, die mittige Längsachse (L) schneidenden Querachse (Q) angeordnet sind, welche eine Teilungsachse für die hälftige Teilung der Trapezaufnahmen (6) bildet.

6. Vorrichtung nach Anspruch 5, dadurch gekennzeichnet, daß der Drehmittelpunkt (D) des Trommelwenders (4) im Schnittpunkt der Teilungsachse (Q) mit einer Trennwand (10) benachbarter Trapezaufnahmen (6) liegt.

7. Vorrichtung nach einem der Ansprüche 1 bis 6, dadurch gekennzeichnet, daß der Trommelwender (4) zwei im vorgegebenen Abstand voneinander angeordnete Lagerringe (11) aufweist, welche in einem Lagergestell (12) auf Lagerrollen (13) gelagert und über die aus Leitblechen gebildeten Trapezfächer (5) miteinander verbunden sind.

8. Vorrichtung nach Anspruch 7, dadurch gekennzeichnet, daß die Lagerringe (11) mittels über ihren Umfang in gleichmäßiger Verteilung angeordneter Längsholme (14) miteinander verbunden sind.

9. Vorrichtung nach Anspruch 7 oder 8, dadurch gekennzeichnet, daß zumindest einer der Lagerringe (11) über einen Riementrieb (15), Zahnstangentrieb oder Reibrädertrieb von einem Antriebsmotor (16) angetrieben ist.

10. Vorrichtung nach einem der Ansprüche 7 bis 9, dadurch gekennzeichnet, daß zumindest einer der Lagerringe (11) um 180° zueinander und um 90° zu den Trapezaufnahmen (6) versetzte Zentrieraufnahmen (17) für eine Zentriereinrichtung (18) am Lagergestell (12) aufweist, welche mit einem vor- und zurückfahrbaren Zentrierglied (19) in die jeweilige Zentrieraufnahme (17) nach einer 180°-Drehung des Trommelwenders (4) eingreift.

11. Vorrichtung nach Anspruch 10, dadurch gekennzeichnet, daß die Zentrieraufnahmen (17) als umgekehrt V-förmige Aufnahmen und die Zentriereinrichtung als Zylinderkolbenanordnung (18) mit einem Zentrierbolzen (19) als Zentrierglied in Verlängerung der Kolbenstange der Zylinderkolbenanordnung ausgebildet sind.

12. Vorrichtung nach einem der Ansprüche 1 bis 11, dadurch gekennzeichnet, daß der Anschlag (7) als ortsfester Anschlag mit Trapezausnehmungen (20) für die lagerichtigen Trapezstreifen (1a) ausgebildet ist und diese Trapezausnehmungen (20) den lagerichtigen Trapezfächern (5) bzw. deren Trapezaufnahmen (6) zugeordnet sind.

13. Vorrichtung nach einem der Ansprüche 1 bis 11, dadurch gekennzeichnet, daß der Anschlag (7) an den Trommelwender (4) angeschlossen und mit beidseitig versetzten Trapezausnehmungen (20) wahlweise den Trapezaufnahmen (6) mit den lagefalschen Trapezstreifen (1b) vorschaltbar ist.

## Claims

1. An apparatus for the aligned delivery of trapezoidal strips, which are fed alternately with their narrow sides at the top and at the bottom, for insertion in trapezoidal channels of facings for sandwich elements, characterised by a drum-type turning device (4) comprising trapezoidal compartments (5) disposed side by side and comprising trapezoidal receivers (6), which are aligned upwards and downwards alternately, for trapezoidal strips (1) which are introduced alternately with their narrow sides at the top and at the bottom, and comprising a stop (7) on the delivery side which is associated with the trapezoidal compartments (5) for the trapezoidal strips (1b) with their narrow sides at the top, wherein the drum-type turning device (4) is mounted so that it can rotate by at least 180° about its longitudinal axis (L), and characterised by conveying means for delivering the trapezoidal strips.

2. An apparatus according to claim 1, characterised in that the trapezoidal compartments (5) overlap each other at least in the region of the trapezoidal receivers (6), and the upwardly and downwardly aligned trapezoidal receivers (6) are situated side by side in the same feeding and delivery plane.

3. An apparatus according to claims 1 or 2, characterised in that conveying rollers (8), which are situated transversely to the direction of conveying of the trapezoidal strips (1) and which are disposed at predetermined spacings to each other in the direction of conveying, enter the trapezoidal compartments (5) in an upper row and in a lower row, and that the conveying rollers (8) delimit the trapezoidal receivers (6) at the associated broad sides of the trapezoidal strips (1).

4. An apparatus according to claim 3, characterised in that the conveying rollers (8) form roller tables for the trapezoidal strips (1), and are driven.

5. An apparatus according to any one of claims 1 to 4, characterised in that the drum-type turning device (4) is disposed in a horizontal position and is driven in rotation by 180°, in cycles, about its horizontal and central longitudinal axis (L), and that the trapezoidal receivers (6) are disposed on a horizontal transverse axis (Q) which intersects the central longitudinal axis (L), which transverse axis forms a division axis for dividing the trapezoidal receivers (6) in half.

6. An apparatus according to claim 5, characterised in that the centre of rotation (D) of the drum-type turning device (4) is situated at the point of intersection of the division axis (Q) with a partition wall (10) between adjacent trapezoidal receivers (6).

7. An apparatus according to any one of claims 1 to 6, characterised in that the drum-type turning device (4) comprises two bearing rings (11) which are disposed at a predetermined spacing from each other and which are mounted on bearing rollers (13) in a bearing frame (12) and via which the trapezoidal compartments (5), which are formed from guide plates, are joined to each other.

8. An apparatus according to claim 7, characterised in that the bearing rings (11) are joined to each other by means of longitudinal stays (14) which are disposed in a uniform distribution over their peripheries.

9. An apparatus according to claims 7 or 8, characterised in that at least one of the bearing rings (11) is driven by a drive motor (16) via a belt drive (15), a rack drive or a wheel and disc drive.

10. An apparatus according to any one of claims 7 to 9, characterised in that at least one of the bearing rings comprises centring receivers (17), which are displaced by 180° in relation to each other and which are displaced by 90° in relation to the trapezoidal receivers (6), for a centring device (18) on the bearing frame (12), an advanceable and retractable centring member (19) of which centring device engages in the respective centring receiver (17) after a 180° rotation of the drum-type turning device (4).

11. An apparatus according to claim 10, characterised in that the centring receivers (17) are constructed as inverted V-shaped receivers, and the centring device is constructed as a cylinder and piston arrangement (18) comprising a centring pin (19) as a centring element, which is formed by an extension of the piston rod of the cylinder and piston arrangement.

12. An apparatus according to any one of claims 1 to 11, characterised in that the stop (7) is constructed as a fixed stop comprising trapezoidal recesses (20) for the correctly positioned trapezoidal strips (1a), and said trapezoidal recesses (20) are associated with the correctly positioned trapezoidal compartments (5) or with the trapezoidal receivers (6) thereof.

13. An apparatus according to any one of claims 1 to 11, characterised in that the stop (7) is attached to the drum-type turning device (4), and trapezoidal recesses (20) of the stop, which are staggered on both sides, can be disposed alternately in front of the trapezoidal receivers (6) which comprise the incorrectly positioned trapezoidal strips (1b).

## Revendications

1. Dispositif pour l'évacuation alignée de bandes trapézoïdales introduites avec la petite base se trouvant alternativement en bas et en haut en vue de leur mise en place dans les moulures trapézoïdales de parements pour panneaux sandwich, **caractérisé par** un inverseur à tambour (4) à compartiments trapézoïdaux (5) disposés côte à côte avec des logements trapézoïdaux (6) orientés alternativement vers le bas et vers le haut pour les bandes trapézoïdales (1) introduites avec la petite base se trouvant alternativement en bas et en haut et avec une butée (7) affectée sur le côté sortie aux compartiments trapézoïdaux (5) pour les bandes trapézoïdales dont la petite base se trouve vers le haut (1b), l'inverseur à tambour (4) pouvant pivoter d'au moins 180° sur son axe longitudinal (L) , et par des moyens de transport pour l'enlèvement des bandes trapézoïdales.

2. Dispositif selon la revendication 1, **caractérisé par le fait** que les compartiments trapézoïdaux (5) se chevauchent au moins au niveau des logements trapézoïdaux (6) et que les logements trapézoïdaux (6) orientés vers le bas et vers le haut se trouvent côte à côte sur le même niveau d'alimentation et d'évacuation.

3. Dispositif selon la revendication 1 ou 2, **caractérisé par le fait** que les compartiments trapézoïdaux (5), dans une rangée supérieure et une rangée inférieure, sont pénétrés par des rouleaux de manutention (8) disposés transversalement au sens de transport des bandes trapézoïdales (1) et espacés selon des écarts prédéfinis dans le sens de transport et que les rouleaux de manutention (8) délimitent les logements trapézoïdaux (6) vis-à-vis des grandes bases affectées des bandes trapézoïdales (1).

4. Dispositif selon la revendication 3, **caractérisé par le fait** que les rouleaux de manutention (8) constituent des trains de rouleaux pour les bandes trapézoïdales (1) et sont entraînés.

5. Dispositif selon une des revendications 1 à 4, **caractérisé par le fait** que l'inverseur à tambour (4) est disposé horizontalement et que son axe longitudinal horizontal et central (L) est entraîné de façon cadencée par une rotation de 180° et que les logements trapézoïdaux (6) sont disposés sur un axe transversal (Q) horizontal coupant l'axe longitudinal central (L) et constituant un axe de division pour la division par moitié des logements trapézoïdaux (6).

6. Dispositif selon la revendication 5, **caractérisé par le fait** que le centre de rotation (D) de l'inverseur à tambour (4) se trouve à l'intersection de l'axe de division (Q) et d'une paroi (10) des logements trapézoïdaux (6) voisins.

7. Dispositif selon une des revendications 1 à 6, **caractérisé par le fait** que l'inverseur à tambour (4) présente deux paliers annulaires (11) espacés selon un écart prédéfini, qui reposent dans un châssis (12) sur des rouleaux de soutien (13) et qui sont reliés entre eux par les compartiments trapézoïdaux (5) constitués de tôles de guidage.

8. Dispositif selon la revendication 7, **caractérisé par le fait** que les paliers annulaires (11) sont reliés entre eux par des longerons longitudinaux (14) régulièrement disposés sur leur circonférence.

9. Dispositif selon la revendication 7 ou 8, **caractérisé par le fait** qu'au moins un des paliers annulaires (11) est entraîné par l'intermédiaire d'une commande par courroie (15), crémaillère ou galet de friction par un moteur d'entraînement (16).

10. Dispositif selon les revendications 7 à 9, **caractérisé par le fait** qu'au moins un des paliers annulaires (11) présente des logements de centrage (17), décalés de 180° entre eux et de 90° par rapport aux logements trapézoïdaux (6), pour un dispositif de centrage (18) au niveau du châssis (12), dispositif de centrage qui s'engage par un élément de centrage (19) avançant et se rétractant dans le logement de centrage respectif (17) après une rotation de 180° de l'inverseur à tambour (4).

11. Dispositif selon la revendication 10, **caractérisé par le fait** que les logements de centrage (17) sont conçus comme logements en V inversé et que le dispositif de centrage est conçu comme dispositif à piston cylindrique (18) avec un boulon de centrage (19) comme élément de centrage dans le prolongement de la tige de piston du dispositif à piston cylindrique.

12. Dispositif selon une des revendications 1 à 11, **caractérisé par le fait** que la butée (7) est conçue comme butée fixe avec creux trapézoïdaux (20) pour les bandes trapézoïdales en position correcte (la) et que ces creux trapézoïdaux (20) sont affectés aux compartiments trapézoïdaux en position correcte (5) ou à leurs logements trapézoïdaux (6).

13. Dispositif selon une des revendications 1 à 11, **caractérisé par le fait** que la butée (7) est raccordée à l'inverseur à tambour (4) et peut être, avec des creux trapézoïdaux décalés sur les deux côtés (20), être placée au choix en amont des logements trapézoïdaux (6) avec les bandes trapézoïdales en position incorrecte (1b).
